# EUROPEAN PATENT APPLICATION

(11) **EP 4 134 353 A1**
(43) Date of publication of application: **15.02.2023**
(21) Application number: 21306115.3
(22) Date of filing: 12.08.2021
(51) Int. Cl.: C02F 1/52, C02F 1/56, C02F 1/00, C02F 1/38, C02F 103/10

(54) **METHOD FOR TREATING SUSPENSIONS OF MINERAL PARTICLES**

(71) Applicant: SNF SA, 42160 Andrezieux, Boutheon (FR)
(72) Inventor: Adkins, Steven, 42160 ANDREZIEUX BOUTHEON (FR); Tizzotti, Morgan, 42160 ANDREZIEUX BOUTHEON (FR)
(74) Representative: Lavoix

(57) **Abstract**

Method of in-situ crosslinking a polymer treated mineral slurry residues from a mineral processing operation, in which said mineral slurry residues comprises an aqueous liquid with dispersed particulate mineral solids, characterised by:
(a) combining with said mineral slurry residues a water-soluble ionic polymer such that the dispersed particulate mineral solids of the mineral slurry residues are positively or negatively charged such that said mineral slurry residues are treated, and then
(b) combining with said treated mineral slurry residues a ionic crosslinking agent such that a in-situ crosslinking occurs in the structure of the treated mineral slurry residues,
and wherein the ionicity of the water-soluble polymer and the ionicity of the crosslinking agent are opposite.

## Description

### FIELD OF THE INVENTION

The invention relates to a method for treating a suspension of mineral particles in water. More precisely, the invention takes the form of 'in-situ' cross-linking of polymer treated mineral solids, as present in tailings slurries.

Suspensions of mineral particles in water, or tailings slurries, also called mineral slurry residues are aqueous liquid with dispersed particulate mineral solids, and include all types of tailings, or waste materials. The suspensions result from mineral ore processes. They are for instance industrial tailings and all mine wash and waste products resulting from exploiting mines, such as coal mines, diamonds mines, phosphate mines, metal mines (alumina, platinum, iron, gold, copper, silver, etc...). Suspensions can also result from drilling mud or tailings derived from the extraction of bitumen from oil sand. These suspensions generally comprise mineral particles such as clays, sediments, sand, metal oxides, and may contain oil mixed with water.

The invention is particularly dedicated to the treatment of oil sand tailings.

The treatment of tailings has become a technical, environmental, and public policy issue. It is common practice to use synthetic or natural polymers such as coagulants and flocculants to separate the solids from the liquid.

For a long time, and even nowadays, mineral tailings produced by physical or chemical ore treatment methods have been stored above ground in retention lagoons, ponds, dam or embankments in semi-liquid form. These large volumes of stored tailings therefore create a real hazard, notably if the dikes break.

The improvement of chemical and mechanical treatments of tailings is therefore a great challenge that needs to be addressed.

Various attempts were made in the past decades to improve the treatment of tailings to efficiently recycle water and reduce the volume of tailings ponds. Basically, two types of method have been developed to treat tailings and separate solids from water: physical treatment and chemical treatment.

The main physical treatments include centrifugation, filtration, electrophoresis and electro-coagulation.

On the other hand, chemical methods include process involving the addition of chemicals such as sodium silicate, organic flocculants, inorganic coagulants, oxidizing, reducing agents, carbon dioxide, and pH modifiers.

The process effectiveness of polymer treated tailings is both positively and negatively affected by polymer treatment (flocculation). Benefits are already well documented, whereas their negative impacts are known, but not widely appreciated. Such problems are related to the physical and chemical characteristics of the flocculated solids and/or residual (non-adsorbed) polymer remaining in the water phase and take the form (in no particular order and not an exhaustive list) of:
- Hindered rates of mineral consolidation;
- Reduced floc density;
- Ineffective fines capture;
- Diametrically opposed performance responses (e.g. Fines capture and consolidated solids within Thickener operations);
- Reduced hydraulic conductivity;
- Inferior/ineffective filtration properties (e.g. filter blinding; excessively long cycle times, thin cakes, poor cloth release);
- Flocs sensitive to physical degradation (breakage);
- Polymer on/in floc surfaces results in unwanted physical properties created within the treated systems (e.g. increased yield stress, reduced porosity, deformation when subjected to loading).

In the treatment of coal tailings by Pressure Belt Filtration the use of anionic and cationic polymers combinations is well documented. Usually this takes the form of anionic polymer to flocculate the solids and a subsequent cationic treatment to improve the filtration properties of the material to be processed. The specific order of chemical addition is not fixed, and it is not unusual to see the cationic treatment occurring ahead of the anionic. In such cases the mechanism of treatment is significantly different.

Cationic Pre-treatment (coagulation; mineral surface charge reduction), in the form of inorganic multivalent metal salts (e.g. Fe3+, AI3+, Ca2+) or cationic polymers (e.g. polyDADMAC, polyamine homopolymers) renders the mineral surface less negative, improving its receptiveness to flocculant adsorption and flocculation. However, such treatments do not negate the aforementioned 'problems' associated with flocculated substrates.

Cationic Post-treatment can be made with inorganic multivalent metal salts (e.g. Fe3+, AI3+, Ca2+, Cr3+) or cationic polymers (e.g. homo and acrylamide-based copolymers polymers of DADMAC, amine, MANNICH, AETAC, DMA -epi, METAC). With the surface of the flocculated solids blocked/covered by anionic polymer, the introduction of the aforementioned cationic chemicals react with the anionic functionality within the adsorbed polymer chain, producing an insoluble/limited solubility macro structure over, within and between the available flocs.

Historical literature on the use of cationic chemicals to treat mineral slurries is often misrepresented, defining the chemical as a coagulant, when its application does not directly impact the mineral surface charge and the reaction mechanism is different (e.g. coagulations vs cross-linking).

The invention relates to a method for treating a suspension of mineral particles in water. More precisely, the invention takes the form of 'in-situ' cross-linking of polymer treated mineral solids, as present in tailings slurries. The method of the invention offers technical advantages for all types of tailings treatment as exposed hereafter.

### Tailings Deposition (e.g. PASS (Permanent Aquatic Storage Systems), Deep Pour. Sub-aqueous)

Flocculated tailings naturally retain significant quantities of water within and on the surface of treated material (flocs). Such treatments are not receptive to effective compression dewatering (a function of the reduced porosity, floc deformation, etc, reducing the systems hydraulic conductivity). The use of in-situ cross-linking renders the water-soluble polymer on the floc surface and within the floc structure, insoluble (or of limited solubility, depending on the combination of polymer ionicity used, of cross-linker functionality and dose), resulting in the generation of the previously mentioned 'macro structure' on, within and between flocculated solids. Said structure, and the order of additional strength associated with this form of polymer, creates a highly compressible and porous system, ('sponge like') wherein loading results in immediate and significant water release and improving fines capture, brought about by particle immobilization within the cross-linked flocs. In turn, this significantly reduces the volume of deposited material in a shorter time; releases additional water back to the process sooner and significantly improves the immobilisation of solids within the treated system (resistance to physical shear)

Said processes often require the polymer treated tailings to be transported for varied distances, resulting in suboptimal flocculant treatment (under/over slurry conditioning). In-situ cross-linking of slurries treated with conventional anionic flocculants significantly increases the physical strength of the treated material, reducing his susceptibility to physical degradation, and maintaining its effectiveness over wider operating conditions. In addition to the strength, the polymeric macrostructure produced beneficially alters the way in which physical degradation occurs. In the case of conventional anionic flocculation, the shape and integrity of any given floc results in asymmetric breakage, resulting in the generation of a wide range of subsequent smaller aggregate sizes; these in turn hinder the effectiveness of processes such as consolidation, hydraulic conductivity, fines release into the run-off water. The presence of the high strength, low solubility structure across and through the treated system results in form of 'fractal' structural nature. As already stated, this offers greater resistance to physical shear, but additionally, when aggregate breakage occurs it results in smaller aggregates, which maintain the physical properties of the whole.

### Centrifugation

Polymer is usually applied to the slurry immediately prior to the centrifuge, wherein the conditions for solid/liquid separation are extremely harsh and 'short lived', often resulting in sub-optimal polymer/slurry conditioning and the associated sub optimal centrifuge performance. It is generally thought that minimising the polymer/slurry contact time prior to the centrifuge maintains a greater proportion of the potential effectiveness. As mentioned previously, the use of an in-situ cross-linker produces numerous beneficial characteristics to the polymer treated slurry, these being improved:
- floc resistance to physical degradation;
- floc porosity;
- floc density;
- floc compressive dewatering;
- fines containment within the treated material;
resulting in all round improved centrifuge performance. In-situ crosslinking also negates the negative surface properties of the flocs, by changing the water-soluble anionic polymer on the mineral surface, into an insoluble, pliable solid.

By applying the polymer at an earlier part of the process, it is possible to optimise polymer/slurry conditioning, such that when the in-situ cross-linking takes place, the most effective pre-treatment conditions are 'locked into' the slurry, benefiting the subsequent solids/liquid separation process.

Scroll torque is a significant issue in the effective management of centrifuge performance. The conventional anionic polymer treatment creates a significant amount of additional yield stress (50 to 100%) within the dewatering centrifuge cake, as it moves along the scroll, towards the exit of the centrifuge and in so doing constrains the overall effective performance possible within the process. In-situ cross-linking of the polymer treated slurry, removes virtually all of the polymer related yield stress, whilst creating a floc structure that is extremely receptive to the physical conditions operating within the centrifuge (i.e. flocs are receptive to compressible dewatering)

### Thickener

Within the oil sands industry, thickener operation has specific, and increasing greater, performance requirements. These being:
- Minimum effective settlement rate;
- Overflow quality;
- Underflow solids vs yield stress.

Many of the aforementioned physical changes that in-situ cross-linking generates within an anionic polymer treated slurry are equally as beneficial within the thickener operation. These being:
- Improved floc strength;
- Robustness to process changes;
- Increased floc density;
- Migration of polymer generated yield stress within the consolidating solids;
- Improved compressive dewatering within the consolidating solids.

We already know that increasing the anionic content of the polymer treatment results in:
- Improved fines capture ;
- Higher polymer dose to achieve a given settlement rate ;
- Inferior consolidation of flocculated solids.

Once the minimum effective settlement rate has been achieved, fines capture underpins the overall process effectiveness. However, in-situ cross-linking can be an effective post treatment ahead of the thickener, wherein it benefits both dose effective settlement rate and solids consolidation.

Accordingly, the present invention provides a method of in-situ crosslinking a polymer treated mineral slurry residues from a mineral processing operation, in which said mineral slurry residues comprise an aqueous liquid with dispersed particulate mineral solids, characterised by:
(a) combining with said mineral slurry residues a water-soluble ionic polymer such that the dispersed particulate mineral solids of the mineral slurry residues are positively or negatively charged such that said mineral slurry residues are treated, and then
(b) combining with said treated mineral slurry residues a ionic crosslinking agent such that a in-situ crosslinking occurs in the structure of the treated mineral slurry residues,
and wherein the ionicity of the water-soluble polymer and the ionicity of the crosslinking agent are opposite.

In the scope of the method according to the present invention, « treated mineral slurry residues » means « positively or negatively charged dispersed particulate mineral solids of the mineral slurry residues ». Indeed, the combination of the mineral slurry residues with a water-soluble ionic polymer as reported in step a) of the method according to the invention leads to charge positively or negatively (depending on the ionicity of the polymer) the dispersed particulate mineral solides of the mineral slurry residues. The two expressions can thus be used interchangeably.

In a first mode of the invention, the ionic water-soluble polymer is anionic and the crosslinking agent is cationic.

In a second mode of the invention, the ionic water-soluble polymer is cationic and the crosslinking agent is anionic.

The in-situ crosslinked mineral slurry residues obtained by the method of the invention can be deposed on a ground surface, or sub-aqueously deposed, or transported to a thickener, or further treated by a mechanical step such as centrifugation or under pressure filtration.

It has been discovered that the method of the invention is particularly efficient when the in-situ crosslinked mineral slurry residues is further treated with a mechanical step, and preferably by centrifugation or under pressure filtration.

In one embodiment, the method of the invention thus further comprises a step (c) of centrifugation or filtration under pressure of the in-situ crosslinked mineral slurry residues obtained at step (b).

The method of the invention is based on the discovery that when a ionic crosslinking agent (cationic or anionic) is added into a treated slurry in which the mineral particulate solids are surrounded by opposite ionic charges (respectively anionic or cationic), a specific state of the slurry is created which is called in-situ crosslinked state, that could be seen as an endless continuum fractal network, and that allows an optimal conditioning of the slurry.

In a preferred embodiement of the invention, the crosslinked structure of the mineral slurry residues after step (a) and step (b) is characterised by a yield stress comprised between 500 Pa and 5000 Pa, preferably comprised between 550 Pa and 4000 Pa, more preferably comprised between 600 Pa and 3000 Pa. The yield stress being measured with a SST Rheometer, for example from the company Brookfield, at 25°C. The person of the art knows how to measure the yield stress with such device.

In a preferred embodiement of the invention, the crosslinked structure of the mineral slurry residues after step (a) and step (b) is characterised by a floc resistance such that the maximum value of the average floc size is comprised between 150 µm and 350 µm, preferably between 170 µm and 300 µm, said average floc size being measured in real-time with a Focused Beam Reflectance Measurement (FBRM), for example a ParticleTrack G400 from Mettler Toledo, fitted with a 19 mm diameter probe at 25°C under mixing at 320 rpm. The detection mode of the apparatus is preferably set to the "Macro" mode, making the instrument less sensitive to individual particles to better quantify the 'size' of flocculated aggregates. By size according to the invention it means the mean diameter.

In the first mode of the invention, the method of the invention consists of first applying a water-soluble anionic polymer to the slurry such that anionic polymer adsorbs onto the mineral surface. There is no need to flocculate the solids. Therefore, the anionic polymer may be a flocculant, but also a lower molecular weight polymer such as a dispersant. Then, a cationic crosslinking agent is added into the treated slurry in which the mineral particulate solids are surrounded by anionic charges to create a specific state of the slurry which is called in-situ crosslinked state.

In the second mode of the invention, the method of the invention consists of first applying a water-soluble cationic polymer to the slurry such that cationic polymer adsorbs onto the mineral surface. There is no need to flocculate the solids. Therefore, the cationic polymer may be a flocculant, but also a lower molecular weight polymer such as a coagulant or a dispersant. Then, an anionic crosslinking agent is added into the treated slurry in which the mineral particulate solids are surrounded by cationic charges to create a specific state of the slurry which is called in-situ crosslinked state.

The most sensitive step of the method is the combination with the treated slurry of a ionic crosslinking agent (cationic or anionic) to produce an in-situ crosslinking, also called an endless continuum fractal network in the mineral slurry residues. The amount of ionic crosslinking agent has to be enough to produce the crosslinking in the mineral slurry residues, and to negate the solubility of the ionic polymer (respectively anionic or cationic). The ionic polymer becomes water-insoluble and removes all subsequent process issues traditionally associated with the use of water-soluble ionic polymer such as overdosing or excessive slurry conditioning and shear degradation or filter cloth blinding, or high rake torque in thickener.

In a preferred embodiment, the treated mineral slurry residues is mixed to ensure the crosslinker is effectively conditioned through the ionically treated mineral slurry residues (anionic or cationic). More precisely, in one embodiment, the method of the invention comprises a mixing step (step(a')) after the addition of the water-soluble ionic polymer (anionic or cationic) into the tailings (mineral slurry residues) to treat (step (a)), and before the addition of the ionic crosslinking agent (respectively cationic or anionic) (step (b)). The mixing step can be obtained by transporting the treated tailings (mineral slurry residues), and/or by applying a mechanical shear on the treated tailings (mineral slurry residues).

The strength of the crosslinked structure, or fractal network depends of the water-soluble polymer ionicity, the nature of the ionic crosslinker, the stoichiometric quantity of the crosslinker applied.

As said before, suspensions of mineral particles in water or tailings slurries include all types of tailings, or waste materials. The suspensions result from mineral ore processes. They are for instance industrial tailings and all mine wash and waste products resulting from exploiting mines, such as coal mines, diamonds mines, phosphate mines, metal mines (alumina, platinum, iron, gold, copper, silver, etc...). Suspensions can also result from drilling mud or tailings derived from the extraction of bitumen from oil sand. These suspensions generally comprise mineral particles such as clays, sediments, sand, metal oxides, and may contain oil mixed with water.

The invention is particularly dedicated to the treatment of oil sand tailings. The mineral slurry residues are preferably derived from the tailings of a mineral sand process.

Preferably, the dispersed particulate mineral solids have particle sizes of less than 100 microns, in which preferably at least 80% of the particles have sizes of less than 25 microns. The invention is also efficient for slurry having higher particle size for example Non Segregated Tailings (NST), in which 90% of the particulate mineral solids have a particle size higher than 45 µm, often with significant proportions of particle size of more than 500 µm, and of more than 1000 µm. The size relates to the mean diameter. It is for example measured par laser diffraction for example with a Malvern Mastersize.

The mineral slurry residues have preferably a particulate mineral solids content in the range of 15% to 80% by weight, preferably in the range of 30% to 70% by weight. But suspensions having lower particulate mineral solids content may be efficiently treated with the method of the invention.

In particular, the ionic water-soluble polymer is a synthetic ionic water-soluble polymer obtained by the polymerization of at least one non-ionic monomer and at least one anionic monomer, or the ionic water-soluble polymer is a synthetic water-soluble polymer obtained by the polymerization of at least one non-ionic monomer and at least one cationic monomer.

When the water-soluble polymer is anionic, it is preferably a synthetic polymer but could be a semi-synthetic or a natural polymer. The water-soluble anionic polymer comprises at least one anionic monomer, and preferably at least one nonionic monomer.

When the water-soluble polymer is cationic, it is preferably a synthetic polymer but could be a semi-synthetic or a natural polymer. The water-soluble cationic polymer comprises at least one cationic monomer, and preferably at least one nonionic monomer.

Anionic monomers are preferably selected from the group comprising monomers having a carboxylic function and salts thereof ; monomers having a sulfonic acid function and salts thereof ; monomers having a phosphonic acid function and salts thereof. They include for instance acrylic acid, acrylamide tertio butyl sulfonic acid, methacrylic acid, maleic acid, itaconic acid ; and hemi esters thereof. The most preferred anionic monomers are acrylic acid and salts thereof. Generally, salts are alkaline salts, alkaline earth salts or ammonium salts.

Cationic monomers are preferably selected from the group comprising dimethylaminoethyl acrylate (DMAEA) quaternized or salified; dimethylaminoethyl methacrylate (DMAEMA) quaternized or salified; diallyldimethyl ammonium chloride (DADMAC); acrylamidopropyltrimethylammonium chloride (APTAC); methacrylamidopropyltrimethylammonium chloride (MAPTAC).

Non-ionic monomers are preferably selected from the group comprising acrylamide; methacrylamide; N-mono derivatives of acrylamide; N-mono derivatives of methacrylamide; N,N derivatives of acrylamide; N,N derivatives of methacrylamide; acrylic esters; and methacrylic esters. The most preferred non-ionic monomer is acrylamide.

The water-soluble ionic polymer of the invention is linear or structured. As it is known, a structured polymer is a polymer that can have the form of a star, a comb, or has pending groups of pending chains on the side of the main chain. The polymers of the invention, when structured, remain water soluble.

The water-soluble ionic polymer has preferably an ionicity ranging from between 15 to 80 mol%, preferably from 25 to 50 mol%. The water-soluble ionic polymer may also have an ionicity ranging from between 80 to 100 mol%.

The molecular weight of the ionic water-soluble polymer can be comprised between 1000 and 30 million daltons. It could be for example a dispersant, or a flocculant. When the water-soluble polymer is anionic it's preferably a flocculant having an anionicity comprised between 25 to 50 mol%, and a molecular weight comprised between 5 and 20 million daltons. When the water-soluble polymer is cationic, it's preferably a flocculant or a coagulant having a cationicity comprised between 30 and 100% mol%. When the water-soluble polymer is cationic, its molecular weight is comprised between 1 and 20 million daltons.

In particular, the water-soluble ionic polymer is combined with the mineral slurry residues at an amount comprised between 50g/t and 2000 g/t of particulate mineral solids in said mineral slurry residues. This amount is preferably comprised between 100g/t and 1500g/t, more preferably between 250g/t and 1300g/t, even more preferably between 400 and 1100g/t.

The ionic crosslinking agent may be selected from the group consisting of a synthetic ionic flocculant, a synthetic ionic coagulant, a cationic inorganic coagulant, a cationic natural polymer and semi-natural polymer.

The cationic crosslinking agent is preferably selected from an multivalent metal salts selected from Fe³⁺, Al³⁺, Ca²⁺, or Cr³⁺, or a polyamine, or a Mannich polymer, or a cationic polymer comprising dimethylaminoethyl acrylate (DMAEA) quaternized or salified, or dimethylaminoethyl methacrylate (DMAEMA) quaternized or salified, or diallyldimethyl ammonium chloride (DADMAC), or acrylamidopropyltrimethylammonium chloride (APTAC), or methacrylamidopropyltrimethylammonium chloride (MAPTAC).

In one embodiment, the cationic crosslinking agent is preferably selected and is preferably chosen from any water-soluble inorganic compound which contains Fe³⁺, Al³⁺ or Cr³⁺ as counter ion. It may be chosen in the following group: (poly)aluminium chloride, (poly)aluminium sulfate, (poly)aluminium chlorohydrtate, ferric chloride, ferric sulfate.

In another embodiment, the anionic crosslinking agent is preferably a sodium acrylate polymer, a sodium ATBS polymer, or a sodium methacrylate polymer.

In particular, the ionic crosslinking agent is combined with the treated mineral slurry residues at an amount allowing the in situ crosslinking. Generally, this amount is comprised between 50g/t and 2000 g/t of particulate mineral solids in said mineral slurry residues, preferably comprised between 100g/t and 1500g/t, more preferably between 250g/t and 1300g/t, even more preferably between 400 and 1100g/t.This amount depends of many factors such as the nature of the particulate mineral solids, the concentration of said solids in the mineral slurry residue.

In particular, in the method of the invention, the crosslinked structure or crosslinked state of the mineral slurry residues after step (a) and step (b) is characterized by the formation of a macrostructure.

More particuarly, the crosslinked structure or crosslinked state of the mineral slurry residues after step (a) and step (b) is characterized by the formation of a fractal macrostructure.

As already mentioned, the invention relates to a method of treating suspensions of solid particles in water. It involves mixing the suspension (i.e. the aqueous liquid with dispersed mineral solids of the mineral slurry residues) with the water-soluble ionic polymer of the invention.

The method of the invention can be carried out in a thickener, which is a containment zone, usually in the form of a section of tube of several meters in diameter with a conical bottom in which the particles can settle. According to a specific embodiment, the aqueous suspension (i.e. the mineral slurry residues) is transported by means of a pipe to a thickener, and the step (a) and step (b) being carried out into said pipe, before the thickener. According to a specific embodiment, the aqueous suspension (i.e. the mineral slurry residues) is transported by means of a pipe to a thickener, and the step (a) being carried out into said pipe, before the thickener, and step (b) being carried out into the thickener.

According to another specific embodiment, the step (a) and step (b) are made into a thickener which already contains the suspension (i.e. the mineral slurry residues) to be treated. In a typical mineral processing operation, the suspensions are often concentrated in a thickener. This leads to a higher density slurry which exits from the bottom of the thickener, and an aqueous fluid released from the treated and crosslinked slurry (called liquor) which overflow exits from the top of the thickener.

According to another specific embodiment, the step (a) and step (b) are made during the transport of said suspension (i.e. said mineral slurry residues) to a deposition zone. Preferably, the in-situ crosslinking is made into the pipe which conveys said suspension to a deposition zone. It is on this deposition area that the treated and crosslinked suspension is spread for dehydration and solidification. The deposition zones can be unclosed, such as for example an undefined expanse of soil, or closed such as for example a basin, a cell.

An example of futher treatments that can be carried out during the transport of the suspension is the spreading of the in-situ crosslinked suspension (i.e. the in-situ crosslinked mineral slurry residues) according to the invention on the ground with a view to its dehydration and its solidification and then the spreading of a second layer of suspension treated on the ground on the first solidified layer.

Another example is the continuous spreading of the in-situ crosslinked suspension (i.e. the in-situ crosslinked mineral slurry residues) so that the in-situ crosslinked suspension falls continuously on the suspension previously discharged into the deposition zone, thus forming a mass of in-situ crosslinked mineral slurry residues whose water is extracted.

According to another specific embodiment already mentioned, the in-situ crosslinked suspension (i.e. the in-situ crosslinked mineral slurry residues) is made, and then a mechanical treatment is carried out, such as centrifugation, pressing or filtration.

The method according to the the invention is indeed particularly efficient when the in-situ crosslinked mineral slurry residues is further treated with a mechanical step, and preferably by centrifugation or under pressure filtration.

According to another embodiment, the invention also concerns a method to treat existing polymer treated deposits (i.e. deposits of polymer treated mineral slurry residues), especially those which for a variety of reason have not consolidated to the minimum required strength. In such cases, addition of a suitable crosslinking agent to the deposited mineral slurry residues will increase its strength by at least an order of magnitude, without the need to remove additional water. By existing polymer treated deposits, we consider a slurry that has been treated and deposed in a place for at least a period of several days or months, and that is then crosslinked with a crosslinking agent according to the invention.

In the context oft he invention, the water-soluble ionic polymer and the ionic crosslinking agent can be added in liquid form or in solid form. They can be added as liquid, as an emulsion (water in oil), as a suspension, as a powder or as a dispersion of the polymer in oil. They are preferably added in the form of an aqueous solution.

Obviously, the following examples and figures are only given to illustrate the subject matter of the invention, which is in no way restricted to them.
Figure 1 is a graphic showing the evolution of the Capillary Suction Time (CST) in function of the polymer dosage for three different treatments.
Figure 2 is a graphic showing the floc sizes (in µm) over time for two different treatments.
Figure 3 is a graphic showing the evolution of the ratio between the floc size and the weight percent of fine particles in function of the polymer dosage.

### EXAMPLE

In the following examples, a 0.45 wt% solution of medium anionicity and low molecular weight anionic polymeric floculant, a 40 wt% alum solution and a 40 wt% ferric solution were prepared in process water. All these solutions were stirred until complete solubilisation and stored in a cool and dark place until further use. Flocculation tests have been carried out using Mature Fine Tailings (MFT) having a solid content of 34 wt% solids.

Treatment A: the MFT sample was pre-treated with 900g / dry tonne (solid basis in MFT) of alum and mixed during 10 minutes at 300 rpm. Then, a known amount of polymer solution was added to the pre-treated MFT under constant mixing at 300 rpm. The mixing was maintained during 10 minutes after which flocculation was over and the medium started to expel water.

Treatment B: the MFT sample was pre-mixed 30 seconds at 300 rpm after which a known amount of polymer solution was added to the pre-mixed MFT under constant mixing at 300 rpm during 10 minutes. Then, 900g / dry tonne (solid basis in MFT) of alum were added to the pre-flocculated MFT under constant mixing at 300 rpm. The mixing was maintained during 10 minutes after which flocculation was over and the medium started to expel water.

Treatment C: the MFT sample was pre-mixed 30 seconds at 300 rpm after which a known amount of polymer solution was added to the pre-mixed MFT under constant mixing at 300 rpm during 10 minutes. Then, 900g / dry tonne (solid basis in MFT) of ferric were added to the pre-flocculated MFT under constant mixing at 300 rpm. The mixing was maintained during 10 minutes after which flocculation was over and the medium started to expel water.

### Example 1. Effect of in-situ cross-linking on polymer treated tailings CST

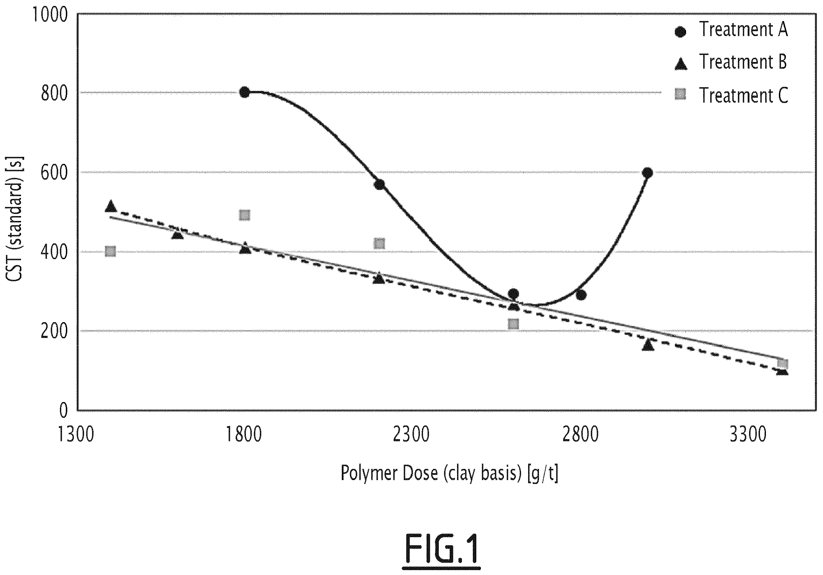

Capillary Suction Time (CST) is a measure of the easy by which water is released from an aqueous system. In this example, 10g of flocculated MFT were sampled after application of treatments A, B and C. Results displayed in Figure 1 show that both alum and ferric post-flocculation systems (i.e. Treatments B and C, respectively) produced superior performances for any given polymer dose when compared to treatment A.

### Example 2. comparison of net floc size vs conditioning time

This example demonstrates the process benefits associated with in-situ cross-linking of polymer treated tailings. Treatments A and B were applied and both tests were conducted with the same dose of anionic polymer (2000 g/t) and alum (900 g/t). In the case of Treatment A, the alum was applied as a pre-treatment (coagulant), whilst the order was reversed for the in-situ cross-linked treatment, i.e. Treatment B. The evolution of the average floc size was live-monitored in-situ with a Focused Beam Reflectance Measurement (FBRM) probe.

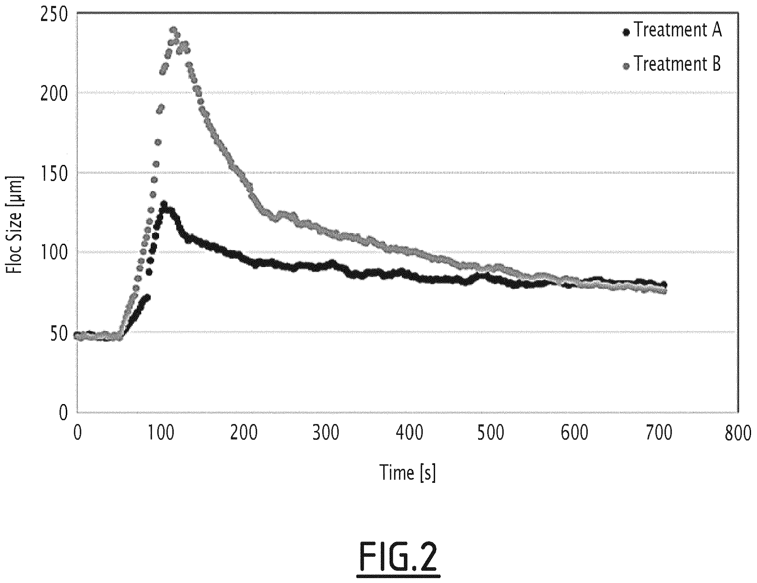

As can be seen on Figure 2, Treatment B resulted in a significant increase in maximum floc size (from -130 to 240 µm) and in robustness to polymer/slurry conditioning. Indeed, the time period over which the average flow size was >100µm lasted from -80 to -420 seconds with Treatment B whereas this time window was shortened to only -100 to -190 seconds with Treatment A.

### Example 3. Comparison of treatments A and B application performances

This example demonstrates the process benefits associated with in-situ cross-linking of polymer treated tailings. Treatments A and B were applied and both these tests were conducted with the same dose of anionic flocculant and alum (900 g/t). In the case of Treatment A, the alum was applied as a pre-treatment (coagulant), whilst the order was reversed for the in-situ Cross-linked treatment, i.e. Treatment B.

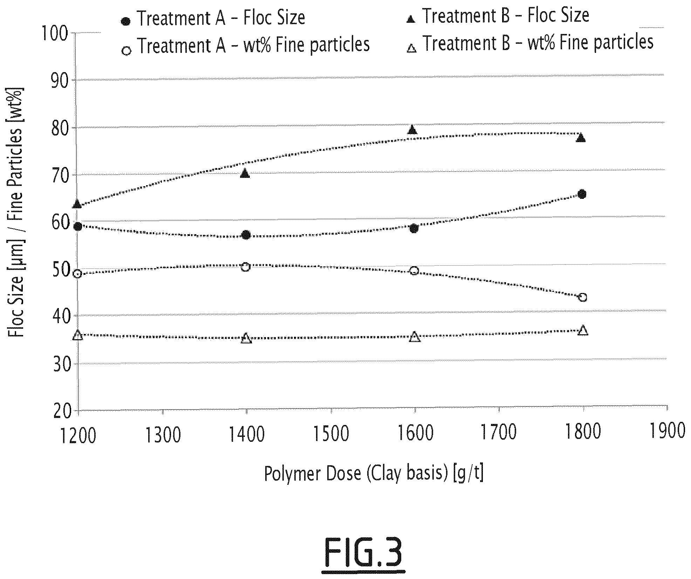

The data from Figure 3 show, for a range of anionic polymeric flocculant dosage, that the mean floc size and free fine particles content (-45µm) after an extended period of mixing (to represent the pipeline transfer of treated slurry from point of flocculant addition to that of deposition). For any given flocculant dose, Treatment B consistently produced larger floc size and lower free fine particles content. The combination of 1400 g/t of flocculant subsequent treatment with 900 g/t of alum resulted in a level of performance that cannot be matched by the Treatment A at flocculant doses lower than 2000 g/t.

## Claims

1. A method of in-situ crosslinking a polymer treated mineral slurry residues from a mineral processing operation, in which said mineral slurry residues comprise an aqueous liquid with dispersed particulate mineral solids, **characterised by**:
(a) combining with said mineral slurry residues a water-soluble ionic polymer such that the dispersed particulate mineral solids of the mineral slurry residues are positively or negatively charged such that said mineral slurry residues are treated, and then
(b) combining with said treated mineral slurry residues a ionic crosslinking agent such that a in-situ crosslinking occurs in structure of the treated mineral slurry residues,
and wherein the ionicity of the water-soluble polymer and the ionicity of the crosslinking agent are opposite.

2. A method according to claim 1, **characterized in that** the ionic water-soluble polymer is anionic and the ionic crosslinking agent is cationic.

3. A method according to claim 1 -, **characterized in that** the ionic water-soluble polymer is cationic and the ionic crosslinking agent is anionic.

4. A method according to any of claims 1 to 3, **characterized in that** the method further comprises a step (c) of centrifugation or filtration under pressure of the in-situ crosslinked mineral slurry residues obtained at step (b).

5. A method according to any of claims 1 to 4, in which the mineral slurry residues are derived from the tailings of a mineral sand process.

6. A method according to any of claims 1 to 5 in which the dispersed particulate mineral solids have particle sizes of less than 100 microns, in which preferably at least 80% of the particles have sizes of less than 25 microns.

7. A method according to any of claims 1 to 6 in which the mineral slurry residues I have a particulate mineral solids content in the range of 15% to 80% by weight, preferably in the range of 30% to 70% by weight.

8. A method according to any of claims 1 to 7 in which the ionic water-soluble polymer is a synthetic ionic water-soluble polymer obtained by the polymerization of at least one non-ionic monomer and at least one anionic monomer, or the ionic water-soluble polymer is a synthetic ionic water-soluble polymer obtained by the polymerization of at least one non-ionic monomer and at least one cationic monomer.

9. A method according to any of claims 1 to 8 in which the ionic water-soluble polymer is combined with the mineral slurry residues at an amount comprised between 50g/t and 2000 g/t of mineral particulate solids in said mineral slurry residues.

10. A method according to any of claims 1 to 9 in which the ionic crosslinking agent is cationic and is chosen from water-soluble inorganic compound which contains Fe³⁺, Al³⁺ or Cr³⁺ as counter ion.

11. A method according to any of claims 1 to 10 in which the ionic crosslinking agent is combined with the treated mineral slurry residues at an amount comprised between 50g/t and 1000 g/t of mineral particulate solids in said mineral slurry residues.

12. A method according to any of claims 1 to 11 in which the crosslinked structure of the mineral slurry residues after step (a) and step (b) is **characterized by** the formation of a macrostructure.

13. A method according to any of claims 1 to 12 in which the crosslinked structure of the mineral slurry residues after step (a) and step (b) is **characterized by** the formation of a fractal macrostructure.

14. A method according to any of claims 1 to 13 in which the in-situ crosslinked mineral slurry residue after step (a) and step (b) is **characterised by** a yield stress comprised between 500 Pa and 5000 Pa, said yield stress being measured with a SST Rheometer at 25°C.

15. A method according to any of claims 1 to 14 in which the crosslinked structure of the mineral slurry residues after step (a) and step (b) is **characterised by** a floc resistance such that the maximum value of the average floc size is comprised between 150 µm and 350 µm, said average floc size being measured in real-time with a Focused Beam Reflectance Measurement (FBRM), fitted with a 19 mm diameter probe at 25°C under mixing at 320 rpm.
